# EUROPEAN PATENT SPECIFICATION

(11) **EP 3 420 411 B1**
(45) Date of publication and mention of the grant of the patent: **16.09.2020**
(21) Application number: 17713437.6
(22) Date of filing: 23.02.2017
(51) Int. Cl.: G03B 17/56

(54) **DEVICE FOR THE USE AND THE CONTEMPORANEOUS SUPPORT OF MORE THAN ONE CAMERA**
VORRICHTUNG ZUR VERWENDUNG UND GLEICHZEITIG UNTERSTÜTZUNG VON MEHR ALS EINER KAMERA
DISPOSITIF POUR L'UTILISATION ET LE SOUTIEN SIMULTANÉ DE PLUS D'UNE CAMÉRA

(30) Priority: 24.02.2016 IT UB20161021
(43) Date of publication of application: 02.01.2019
(73) Proprietor: Giuliani, Paolo, 59013 Montemurlo (PO) (IT)
(72) Inventor: Giuliani, Paolo, 59013 Montemurlo (PO) (IT)
(74) Representative: Mannucci, Michele
(86) International application number: PCT/IB2017/051027
(87) International publication number: WO 2017/145078

(56) References cited:
- GB-A- 2 103 379
- US-A- 4 272 177
- US-A- 4 754 295

## Description

### Technical field

The present invention relates to the field of photographic and video-recording equipment.

More specifically, the invention relates to a device for the use and simultaneous support of more than one camera, mainly to be used for photographic purposes, but also possibly used to make video recordings.

### State of the art

There exist situations in which the photographer finds that he or she has to quickly take photographs of a subject at different focal lengths. Take for example of the case of a photographer who is photographing a sports event, such as a football match. The photographer, in these situations, often needs to take close-ups, and wider shots, for example when a goal is scored. To do this, the photographer is equipped with at least two cameras, each fitted with the most suitable lens, for example a telephoto lens for taking shots of subjects in greater close-up, or a wide-angle lens to be able to take shots of most of the pitch.

It is evident that there are moments in which the photographer has to switch from one camera to the other, so as to be able to manage better the dimensions of the subject to be photographed. For example, think of a player far from the photographer but approaching him or her. The photographer will use a multifocal telephoto lens, for example, or a zoom, and will follow the player for as long as the focal length of the lens permits it, and will then put down the camera with the telephoto lens and pick up the camera with the wide-angle lens, and point it once again at the subject.

This behavior by the photographer necessarily involves problems. For example, the photographer is not able to photograph the action when changing cameras. Indeed, at this stage, the photographer has to lower the first camera, take the second, frame the subject in movement, focus and shoot. It may happen that during the camera change, an important action to be photographed may take place and in this case the photographer inevitably misses the chance to shoot important photographs, such as a goal, for example.

Furthermore, the photographer is necessarily obliged to choose whether to photograph the subject using close-up or wide shots, with the evident loss of one of the two shooting possibilities.

Conventional devices for the use and simultaneous support of more than one camera are disclosed in US 4272177 and US 4754295.

### Object and summary of the invention

The object of the present invention is to solve the above-mentioned problems, associated with photographing or filming events with different focal lengths.

In the context of the above-mentioned object, an important object of the present invention is to provide a device that makes it possible to use more than one camera simultaneously.

Another important object of the present invention is to provide a device that makes it possible to shoot simultaneously with at least two cameras.

A further object of the present invention is to provide a device that makes it possible to use more than one camera, which is light and easy to handle.

These and other objects, which will become more apparent below, are achieved by a device for the use and simultaneous support of more than one camera as defined in independent claim 1, comprising a frame provided with at least two fixing parts for respective cameras, respectively a lower part and an upper part substantially placed over it; on said parts there being provided respective apparatus for reversible fixing of the cameras to the same parts.

The device therefore makes it possible to keep two cameras close together and to position and move them as a single unit, in the most appropriate manner, so as to be able to photograph the same portion of space.

The term 'camera' refers to photographic cameras in general, and devices capable of making video recordings.

In the preferred embodiment, the frame makes it possible to support two cameras, but in other versions it may support a greater number.

Advantageously, the device in turn comprises an orientation adjustment device, at least about a first axis, for at least one camera, so as to allow the cameras to frame the same subject to be photographed.

Preferably, a single such orientation device is present, but in other embodiments one such device may be present for each camera associated with the frame.

According to preferred embodiments, this orientation adjustment device is applied to an above-mentioned fixing part of the camera, so that by orienting said fixing part the camera fixed thereto is also oriented; preferably the orientation adjustment device is applied to the upper part of the frame. In other embodiments, this device may be applied to the lower part or to both.

Preferably, the fixing axes (for example adapted to coincide with the axes of the threaded lower fixing bushings typical of cameras) of the cameras on the top and bottom parts, are aligned on a same plane, so that the cameras have a fixing position whereby the optical axes lie on the same plane, the optical axes being, due to the construction of the cameras, orthogonal to the fixing axes of the bushings of the respective cameras.

In preferred embodiments, the frame comprises two side uprights and at least two crosspieces on which are provided respectively the fixing parts of the cameras. It goes without saying that in other embodiments, the frame may also be of a different shape from the rectangular shape created by uprights/crosspieces (straight or not straight) and may be for example circular, oval or another shape, with the uprights and crosspieces shaped in the most appropriate construction manner. For example, in one embodiment, the upper crosspiece comprises ends that are folded downward to take on an L-shape appearance, and on these folded ends there are provided the rotation hinges for the crosspiece, connecting it to the uprights.

With respect to this upright/crosspiece configuration, preferably, the orientation adjustment device comprises a rotation constraint about one crosspiece for a respective fixing part. In this way, with the ends of the crosspieces lying on a horizontal axis, orientation adjustment is on a vertical plane. Preferably, said rotation constraint is provided with respective hinges placed between the upper crosspiece and the uprights. Preferably there is a friction type rotation constraint blocking system. There may be end-of-travel rotational blocks that determine fixed positions along the hinge for the upper crosspiece.

In preferred embodiments, the support device comprises means for adjusting the length of the uprights, so as to extend or shorten the distance between the cameras. Preferably these means for adjusting the length of the uprights comprise, for each upright, a sleeve placed slidingly at the end of the upright, to which an end of the upper crosspiece is hinged; the sleeve can be reversibly blocked on the upright, for example by means of a pressure or friction blocking system.

In some embodiments, the crosspieces are straight. For example, the upper crosspiece is a bar constrained at the ends by two hinges provided on the uprights; preferably there is provided a friction or pressure type, reversible blocking system for the crosspiece in at least one of said hinges.

In preferred embodiments, at least one said fixing part comprises means for adjusting the axial position of the related camera along an axis orthogonal to the first axis (the orientation adjustment axis); preferably both fixing parts comprise said for adjusting the axial position.

For example, the adjustment means comprise a slide for fixing the camera, provided with a slider adapted to slide, during adjustment, inside a track that extends in the direction of adjustment, there being provided means for locking the slide on the track.

In preferred embodiments, the support device comprises a lower portion for fixing to a support structure; for example this said lower fixing portion comprises a system for coupling to a tripod or a stand.

In preferred embodiments, the support device comprises coupling brackets for accessories, among which one or more flashes and an umbrella.

In preferred embodiments, there is present at least one device for activating the zoom of a camera, for example comprising a ring that can be fixed to the zoom ferrule of the camera and an activating lever fixed to said ring.

In preferred embodiments, the support device comprises a synchronized shooting apparatus for said cameras, comprising a shooting button operatively connected in parallel, by wire or radio, to jacks for connecting to the respective sockets integrated in the respective cameras, for remote shooting.

For example, the synchronized shooting apparatus for said cameras, comprises said jacks for connecting to respective sockets integrated in the respective cameras, for remote shooting; respective cables extending from these jacks, electrically connected in parallel to one common remote shooting button, so that by pressing the button, the cameras connected via the cables shoot a photograph; preferably, a slight pressure on the button activates the autofocus for each camera; preferably the button is provided on the frame and more preferably, on the uprights.

In other embodiments, there may be provided at least three remote shooting buttons. A first button as described above, connected in parallel to the cables directed toward the remote shooting jacks of the cameras, and other buttons, one per camera, connected directly with respective remote shooting jacks of the respective cameras, so as to be able to shoot only with the camera desired (there may be provided respective cables that bypass the union point of the cables to make them parallel). In other embodiments there may be provided a single remote shooting button and a switch control enabling the user to choose whether the button is connected in parallel to the jacks of the cameras for a synchronized shot, or whether the button is directly connected to the remote shooting jack of a desired camera.

In yet other embodiments, the support device comprises two buttons, each associated with operating a respective camera, and a selector button; if this selector button is in a first position, the two buttons are independent from one another, so that pressing them activates the respective camera; when the selector button is in a second position, the two buttons are connected to one another, so that indifferently pressing one button or the other causes the simultaneous activation of both cameras.

### Brief description of drawings

Further characteristics and advantages of the invention will become more apparent from the following description of a preferred but not exclusive embodiment thereof, illustrated by way of non-limiting example in the accompanying drawings, wherein
figure 1 shows a side view of the support device for two cameras according to the invention, with two attached cameras highlighted;
figure 2 shows a front view of the device shown in figure 1;
figure 3 shows a partial cross-section close-up of the upper portion of the device shown in 1;
figure 4 shows a close-up of the upper portion of the device shown in figure 1, with the camera moved further forward;
figure 5 shows a partial cross-section close-up of the lower portion of the device shown in figure 1;
figure 6 shows an overhead view of the device shown in figure 1, without the cameras attached;
figure 7 shows a schematic side view of the device shown in figure 1 during its use, with the subject to be photographed highlighted for the two cameras;

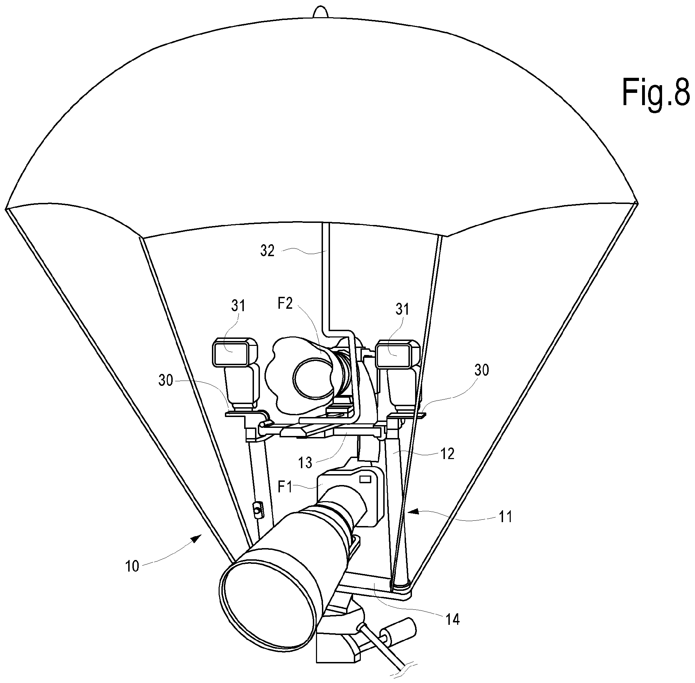

figure 8 shows a schematic view of the upper portion of the device according to the invention, with accessories attached, such as two flashes and an umbrella;
figure 9 shows a perspective overhead view of a variant of the device illustrated in the previous figures, with two cameras attached;
figure 10 shows a side view of the device shown in figure 9;
figure 11 shows the same view of the device shown in figure 9, without the cameras;
figure 12 shows a perspective view from below of the device shown in figure 11.

### Detailed description of an embodiment of the invention

With reference to the figures mentioned above, a device for the use and simultaneous support of more than one camera according to the invention, is indicated to as a whole by the number 10.

This device 10 comprises a frame 11 formed of two uprights 12 and two overlapping crosspieces, an upper 13 and a lower 14, extending along respective first axes X.

Below the lower crosspiece 14, there is provided a lower portion 15 for fixing to a support structure, which takes the form, for example, of a system for coupling (not shown in the figures) to a tripod or a stand 16, for example of the type known with fixing screws on the head of the tripod and a complementary threaded bushing.

The two upper and lower crosspieces 13 and 14 define respective upper and lower fixing parts (indicated hereinafter with the number of the corresponding crosspieces) for two cameras, F1 and F2, for example of the same brand, and fitted with lenses of different focal lengths.

In this example, each crosspiece 13 and 14, in the center, is provided with an elongated beam 17, which extends in front of and behind the crosspiece itself.

On these crosspieces/fixing parts 13 and 14 there are provided respective apparatus 18 for reversible fixing of the cameras to the same parts.

On each elongated beam 17 there are provided means 20 for adjusting the axial position of the related camera along a second axis Y orthogonal to the first axis X of the respective crosspiece, namely the axis of the elongated beam 17.

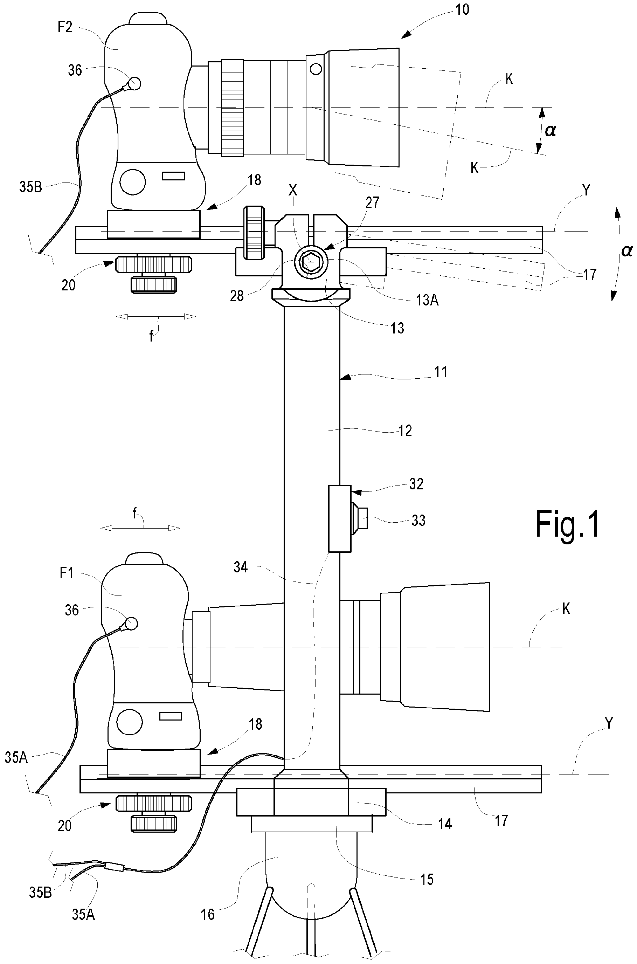

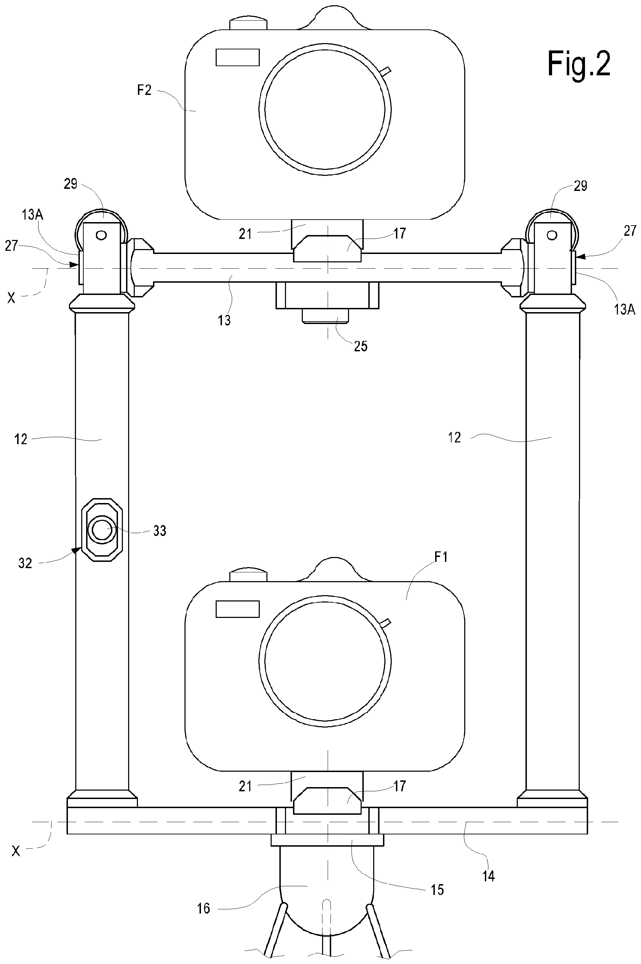

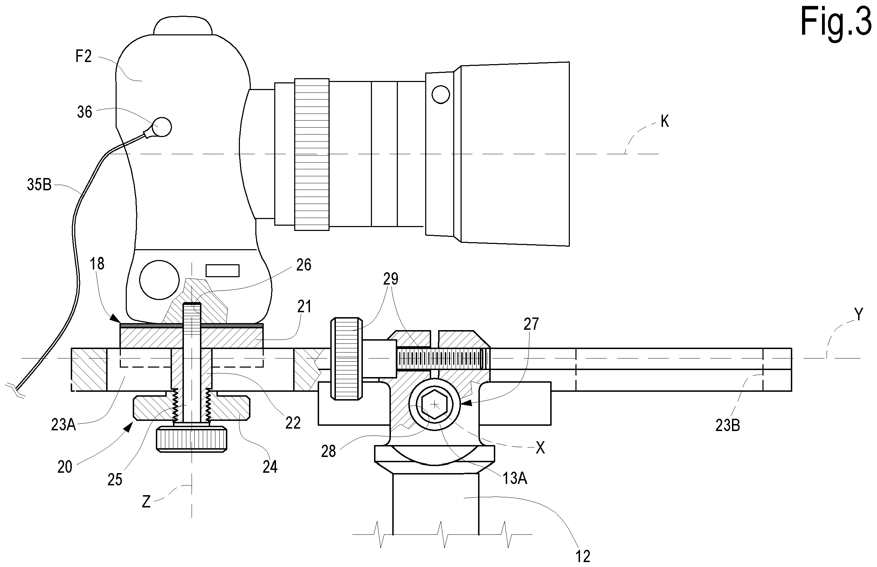

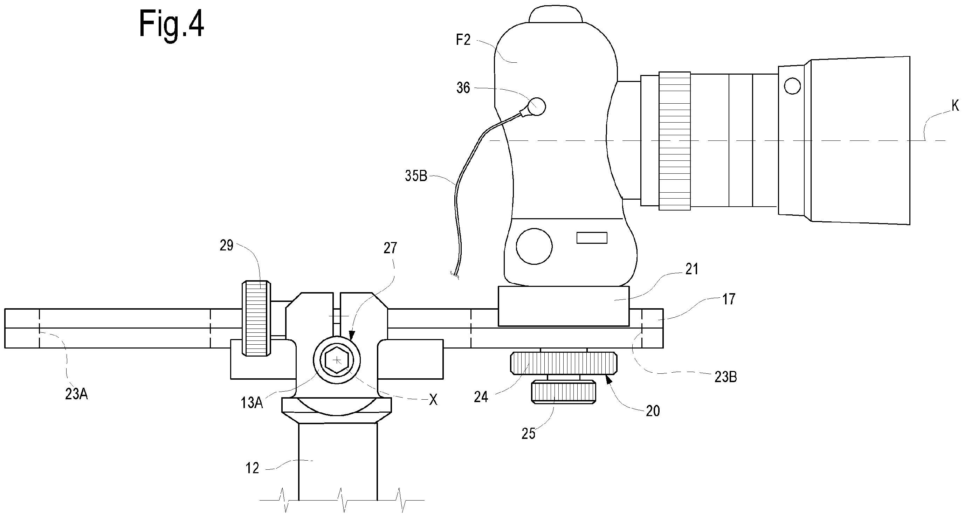

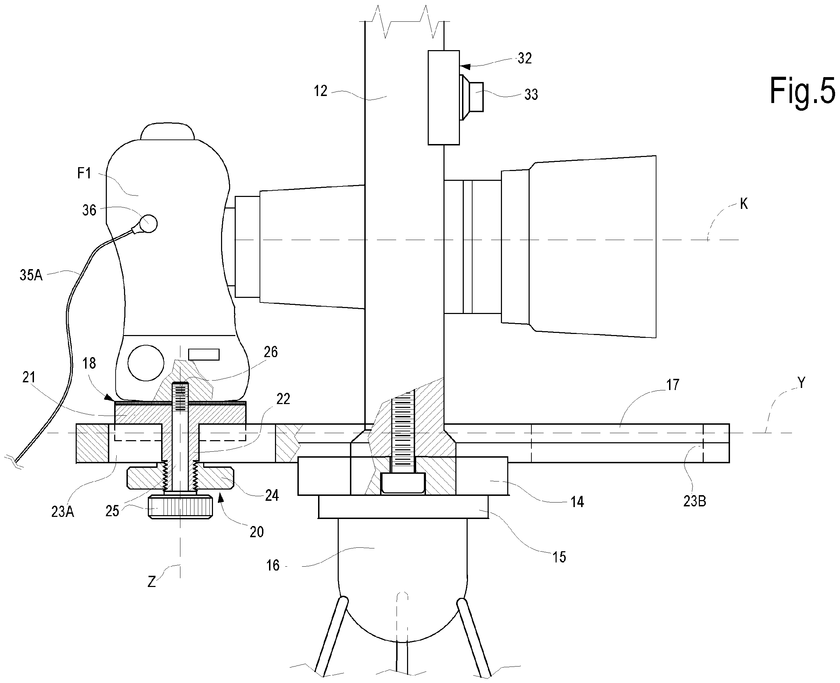

In particular, in this example, the axial adjustment means 20 comprise (see specifically figure 3) a slide 21 for fixing the respective camera, provided with a slider 22 adapted to slide (f), during adjustment, inside a track 23A-23B, for example in the form of a slot, made in the respective elongated beam 17, which extends in the direction of axial adjustment. In this example there are provided two tracks 23 for each elongated beam, a rear track 23A and a front track 23B (in figures 1, 2, 3, 5 and 7, the upper slider 21 is placed on the rear track 23A, while in figure 4 it is placed on the front track 23B).

There are provided means of blocking the slide 21 on the track 23A-23B (for simplicity, hereinafter indicated only by the number 23). For example, these blocking means comprise a threaded ferrule 24, engaged with a threaded screw portion made at the end of said slider 22 and projecting downwards through the track 23, so that by bringing the ferrule against the lower face of the elongated beam 17, movement of the slide 21 above is blocked.

Advantageously, the apparatus 18 for fixing the camera to the support device described, is provided with a screw 25 with a fixing axis Z, passing through the slider 22 and the slide 21, and adapted to engage with the complementary traditional threaded bushing 26 present as standard on all cameras (which will have an axis coincident with the axis Z).

The fixing axes Z of the screws 25/bushings 26 of the two cameras F1-F2 of the fixing apparatus 18 are aligned on the same plane, so that the cameras have a fixing position such that the optical axes K lie on a same plane (hypothesizing that the two cameras are identical or that the distance between the optical axes K and axes Z of the respective bushings 26 are identical), substantially vertical or nearly vertical (with the crosspieces placed with a horizontal orientation).

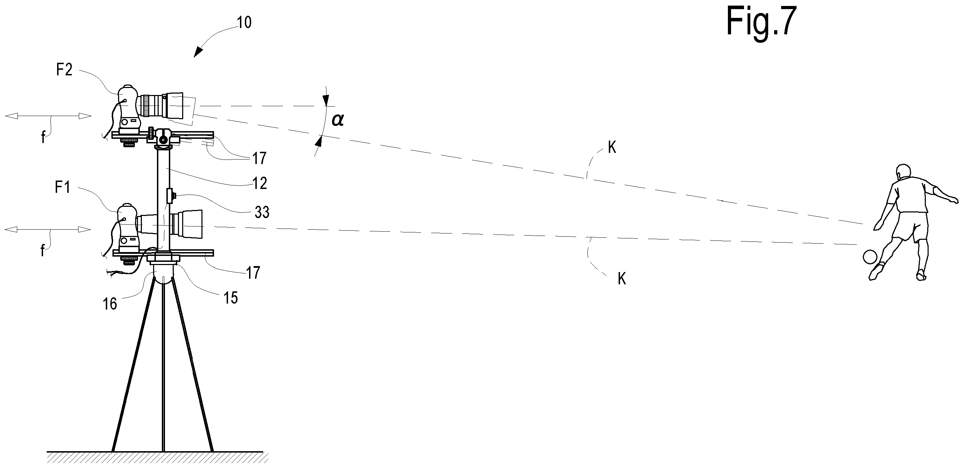

Advantageously, the device 10 in turn comprises an orientation adjustment device 27, about the first axis X of the upper crosspiece/upper fixing part 13, for the related camera, so as to allow the cameras to frame the same subject to be photographed, as shown in figure 7. In practice, it is thereby possible to incline the camera by a certain angle α so that the optical axes of the two cameras converge in the area where the subject to be photographed is located.

The orientation adjustment device 27 comprises a rotation constraint about the upper crosspiece 13 for the same crosspiece, namely for the upper fixing part 13.

This constraint, for example, is the combination of the cylindrical end 13A of the bar forming the crosspiece 13, with two rotational hinges 28 placed at the end of the bar/crosspiece 13 and provided on the uprights 12.

There is provided a rotation constraint blocking system, for example the constraint may consist of an open cylindrical seat, and a screw with a friction blocking knob 29, and may be engaged laterally with two opposing portions of the cylindrical seat so as to bring closer/move apart the two opposing portions of the seat, so as to increase/decrease the friction or pressure of the seat on the bar contained therein, in a known manner.

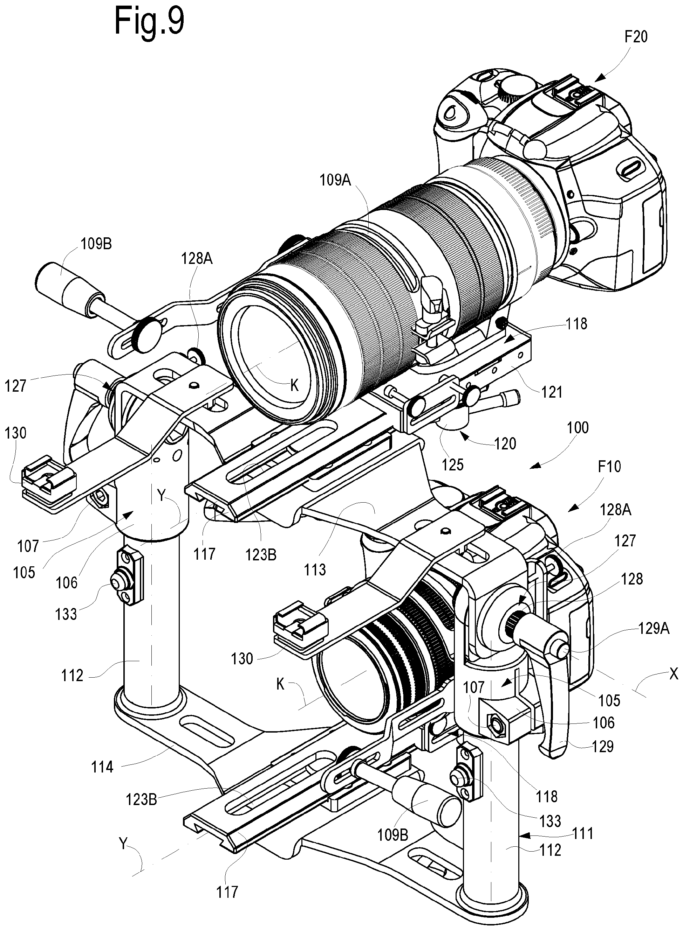

In preferred embodiments, the support device comprises coupling brackets 30 for accessories, such as a flash 31 and an umbrella 32, as shown in figure 9.

Advantageously, the support device 10 comprises a synchronized shooting apparatus 32 for the two cameras F1 and F2. This synchronized shooting apparatus in turn comprises a common shooting button 33 integrated for example in an upright 12, from which a common section of electrical/electronic cable 34 extends, preferably at least partially inside the upright, to which are connected in parallel (i.e. the cable splits) two sections of electrical/electronic cable 35A and 35B fitted at the ends of respective jacks 36 for connecting to the respective sockets integrated in the respective cameras, for remote shooting (standard in cameras). In practice, the two sections 35 are electrically/electronically connected in parallel to the button 33, so that by pressing the button, the cameras connected via the cables almost simultaneously (unless the cameras have different focusing times) shoot a photograph. Advantageously, a slight pressure on the button 33 activates the autofocus for each camera.

Operation is as follows. The photographer mounts the support device 10 on a tripod (or other device, such as a stand or monopod, etc.) by means of connecting the lower fixing portion 15 to the tripod.

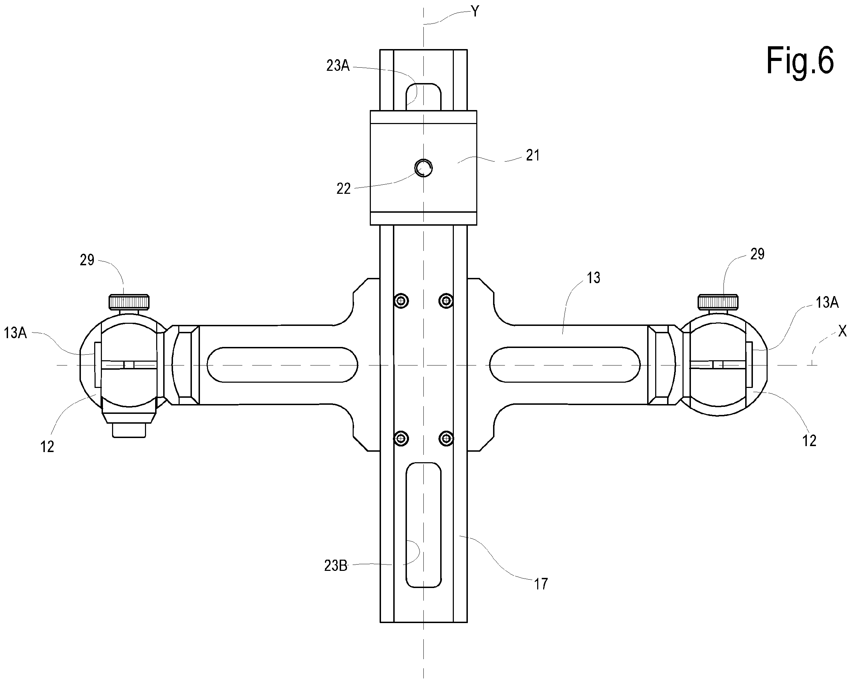

He or she then positions the slides 21 in the tracks 23A (figures 1, 2, 3, 5, 6, 7) or 23B (figure 4), depending on requirements.

He or she then positions the two cameras on the two slides 21 and fixes them by means of the screws 25. The axial position of the cameras can be adjusted (f) by moving the slides along the tracks 23. Then, by turning the ferrule 24, their axial position can be blocked.

Vertical orientation adjustment (α) of the upper camera is achieved by loosening the knob 29, and turning the crosspiece 13 with the camera attached, thru a desired angle, until the same area or subject framed by the lower camera is brought into frame, and finally by tightening the knob to block movement of the crosspiece once again.

The two cameras thereby frame the same portion of space/subject, with lenses of different focal lengths (figure 7). By pressing the button 33, the photographer simultaneously shoots two photographs with two different fields of view.

It is apparent that the device may also be used simply by shooting photographs singly from each camera.

The example given here relates to two cameras, but obviously the same structure may also be used for three or more cameras, arranged for example on three crosspieces placed one above the other, or even in different positions, not necessarily with the optical axes aligned on a vertical plane.

Even the synchronized shooting apparatus, which here relates to two cameras, may be applied to three or four cameras, with the common shooting button operatively connected in parallel to the remote shooting connection for the cameras.

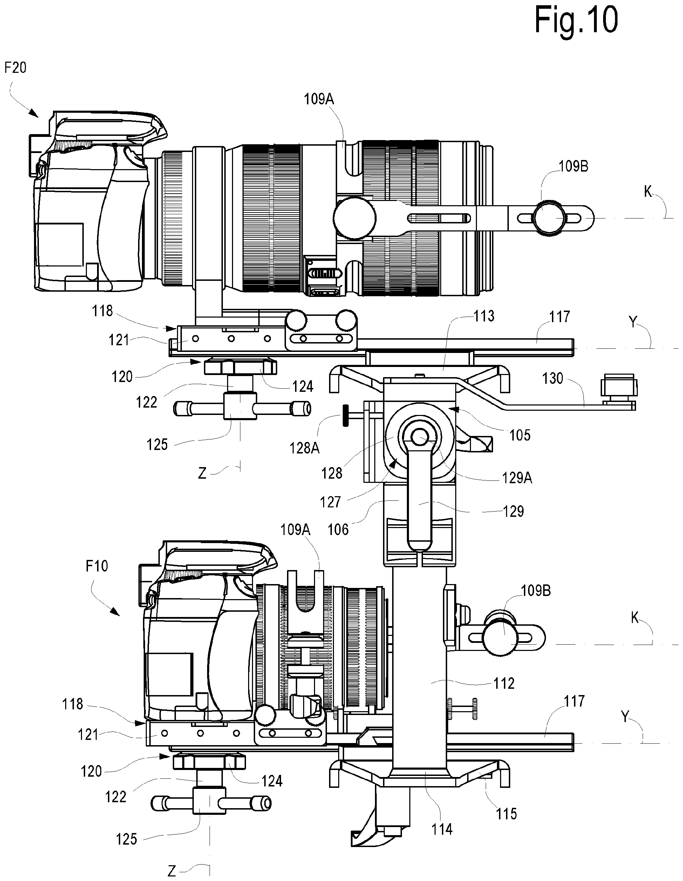

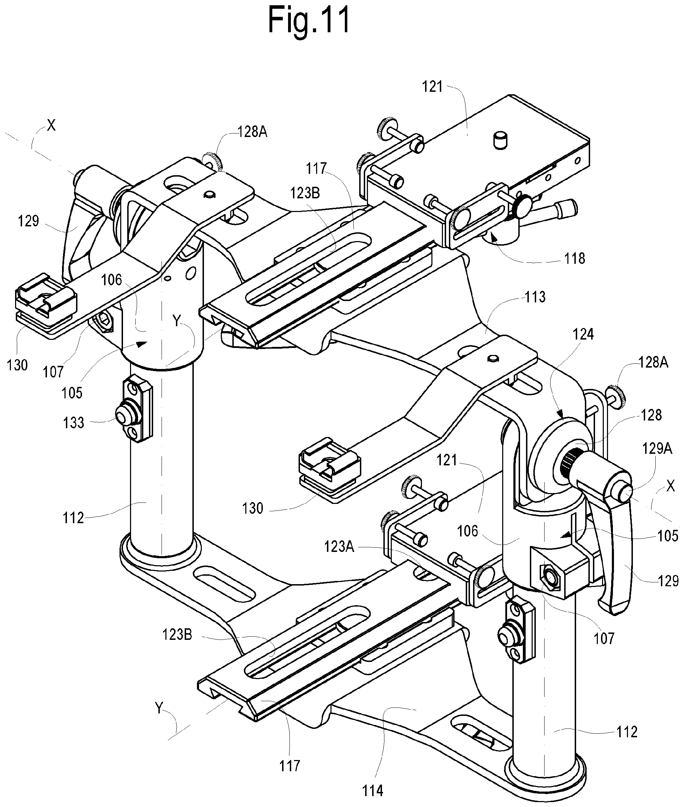

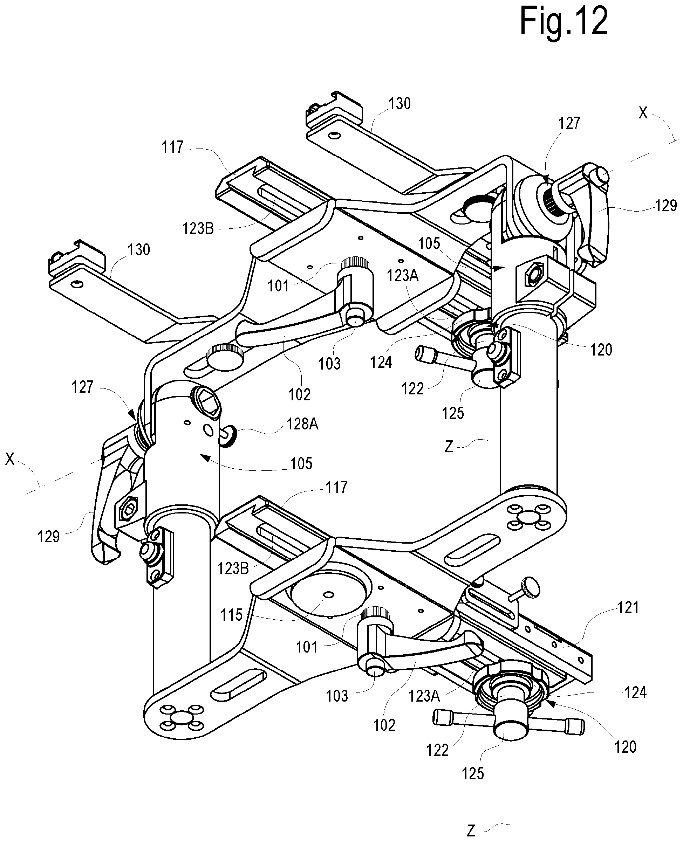

Figures 9 to 12 show a device according to the invention, which is a variant with respect to the previous example, indicated by the number 100.

This device is substantially similar to that described above, but with components of a slightly different shape and with several additional functions.

This device 100 comprises a frame 111 formed of two uprights 112 and two overlapping crosspieces, an upper 113 and a lower 114, extending along respective first axes X.

Below the lower crosspiece 114, there is provided a lower portion 115 for fixing to a support structure, which takes the form, for example, of a system for coupling (not shown in the figures) to a tripod or a stand, for example of the type known with fixing screws on the head of the tripod and a complementary threaded bushing.

The two upper and lower crosspieces 113 and 114 define respective upper and lower fixing parts (indicated hereinafter with the number of the corresponding crosspieces) for two cameras, F10 and F20, for example of the same brand, and fitted with lenses of different focal lengths.

Each crosspiece 113 and 114, in the center, is provided with an elongated beam 117, which extends in front of and behind the crosspiece itself.

Each elongated beam 117 is articulated to the respective crosspiece by means of a hinge 101, with an axis of rotation substantially orthogonal to the axis X, and is fitted with a friction blocking mechanism, which can be operated by means of a lever 102, and for example can be quickly unblocked by means of a quick release button 103. In this way, the beam, and therefore the respective camera, can also be oriented about an axis orthogonal to the axis X.

On these crosspieces/fixing parts 113 and 114 there are provided respective apparatus 118 for reversible fixing of the cameras to the same parts.

On each elongated beam 117 there are provided means 120 for adjusting the axial position of the related camera along a second axis Y orthogonal to the first axis X of the respective crosspiece, namely the axis of the elongated beam 117.

In particular, in this example, the axial adjustment means 120 comprise a slide 121 for fixing the respective camera, provided with a slider 122 adapted to slide, during adjustment, inside a track 123A-123B, in the form of a slot, made in the respective elongated beam 117, which extends in the direction of axial adjustment. In this example there are provided two tracks 123 for each elongated beam, a rear track 123A and a front track 123B.

There are provided means of blocking the slide 121 on the track 123A-123B (for simplicity, hereinafter indicated only by the number 123). For example, these blocking means comprise a threaded ferrule 124, engaged with a threaded screw portion made at the end of said slider 122 and projecting downwards through the track 123, so that by bringing the ferrule against the lower face of the elongated beam 117, movement of the slide 121 above is blocked.

Advantageously, the apparatus 118 for fixing the camera to the support device described, is provided with a screw 125 with a fixing axis Z, passing through the slider 122 and the slide 121, and adapted to engage with the complementary traditional threaded bushing present as standard on all cameras (which will have an axis coincident with the axis Z).

As in the previous example, when the two beams 117 are parallel to one another, the fixing axes Z of the screws/bushings of the two cameras F10-F20 of the fixing apparatus 118 are aligned on the same plane, so that the cameras have a fixing position such that the optical axes K lie on a same plane (hypothesizing that the two cameras are identical or that the distance between the optical axes K and axes Z of the respective bushings are identical), substantially vertical or nearly vertical (with the crosspieces placed with a horizontal orientation).

As in the previous example, the device 100 an orientation adjustment device 127, about the first axis X, of the upper crosspiece/upper fixing part 113, for the related camera, so as to allow the cameras to frame the same subject to be photographed.

The orientation adjustment device 127 comprises a rotation constraint about the upper crosspiece 113 for the same crosspiece, namely for the upper fixing part 113.

This constraint, for example, is achieved by two rotational hinges 128 placed at the end of the crosspiece 113 and the uprights 112.

There is provided a rotation constraint blocking system for each hinge 128, for example a friction type system, comprising a friction blocking knob 129, preferably fitted with a quick friction release knob 129A.

There are provided "micro"-adjustable end-of-travel rotational blocks 128A, for the hinges 128, adapted to make it possible to set a certain inclination of the upper crosspiece 113, made for example from threaded elements passing through a portion of the end of the respective upright 112 and adapted to strike against a stopped on the end of the upper crosspiece 113.

In preferred embodiments, the support device comprises coupling brackets 130 for accessories, such as a flash.

Advantageously, there are provided means 105 for adjusting the length of the uprights 112. For example, these means 105 comprise, for each upright, a sleeve 106 placed at the upper end of the upright, which can slide for a certain distance along the upright. On this sleeve 106 there is the respective hinge 128 connecting to the upper crosspiece 113. The position of the sleeve can be blocked by a blocking system, for example a friction type system, or a traditional screw pressure type system 107.

The support device 100 comprises two buttons 133, placed on the respective uprights 112, operatively connected by means of suitable wiring (not shown in the figures, for simplicity), each to the related camera. By pressing the respective button 133, the respective camera performs the typical commands associated with pressing the button on the camera itself, namely focusing and shooting, depending on the pressure).

Advantageously, as in the previous example (and therefore not shown explicitly in the figures), the support device 100 comprises synchronized shooting apparatus for the two cameras F10 and F20. This synchronized shooting apparatus comprises selector button, not shown in the figures, and if this selector button is in a first position, the two buttons 133 are independent from one another, so that pressing them activates the respective camera. When the selector button is in a second position, the two buttons 133 are connected to one another, so that indifferently pressing one button or the other causes the simultaneous activation of both cameras, as in the example described above (pressing one of the two buttons 133, the cameras connected via the cables shoot a photograph almost simultaneously, unless the cameras have different focusing times; advantageously, a slight pressure on the button 133 activates the autofocus for each camera).

For each camera there may be provided a device for adjusting the zoom 109, comprising a blocking ring 109A that can be reversibly tightened around the zoom ferrule of the related camera, and an activating lever 109B fixed to said ring, so that by moving the lever, the ring is rotated and thereby also the zoom ferrule.

Apart from the different parts described above, operation of the device is similar to that described previously.

It should be understood that the description given represents only certain possible non-limiting embodiments of the invention, which may vary in form and arrangement without straying from the basic concept of the invention as defined by the claims. The presence of reference numbers in the accompanying claims is intended simply to facilitate understanding thereof in the light of the preceding description and accompanying drawings, and in no way limits the scope of protection.

## Claims

1. Device (10) for the use and simultaneous support of more than one camera (F1, F2), comprising a frame (11) provided with at least two fixing parts for respective cameras, respectively a lower part (14) and an upper part (13) substantially placed over it; on said parts there being provided respective apparatus (20) for reversible fixing of the cameras to the same parts; said device comprising at least one device (27) for adjusting the vertical inclination orientation, at least about a first axis (X), for at least one camera, so as to allow the cameras to have their optical axes (K) substantially converging toward the same area.

2. Device according to claim 1, wherein said orientation adjustment device is applied to one said fixing part of the camera, so that by orienting said fixing part the camera fixed thereto is also oriented; said orientation adjustment device is applied
- only to said upper part, or
- only to said lower part or
- to both said upper and lower parts.

3. Device according to claim 1 or 2, wherein said frame comprises two lateral uprights (12) and at least two crosspieces (13, 14) on which there are respectively provided said fixing parts of the cameras.

4. Device according to claim 2, wherein said orientation adjustment device comprises a rotation constraint about one said crosspiece for a respective fixing part.

5. Device according to claim 4, wherein said orientation adjustment device comprises one said upper crosspiece (13), on which is provided the fixing part for the upper camera, and at least one hinge (28), preferably two, forming said rotation constraint, rotationally connected to a respective upright, there being provided a system (29) for blocking the rotation of said upper crosspiece on said hinges; preferably said rotation blocking system is a friction type system.

6. Device according to one or more of the claims from 2 to 5, wherein said crosspiece is a bar constrained at the ends by two hinges (28) provided on said uprights; preferably there being provided a friction or pressure type system for blocking said crosspiece in at least one of said hinges.

7. Device according to one or more of the preceding claims, wherein at least one said part comprises means (20) for adjusting the axial position of the related camera along an axis orthogonal to said first axis; preferably both said parts comprising said means for adjusting the axial position.

8. Device according to claim 7, wherein said adjustment means comprise a slide (21) for fixing the camera, provided with a slider (21, 22) adapted to slide, during adjustment, inside a track (23A, 23B) that extends in the direction of adjustment, there being provided means for locking said slide on said track.

9. Device according to one or more of the preceding claims, comprising a lower fixing portion (15) for fixing to a support structure; preferably with said lower fixing portion comprising a system for coupling to a tripod or a stand (16).

10. Device according to one or more of the claims from 3 to 5, wherein there are provided means (105) for adjusting the length of said uprights; preferably said means for adjusting the length of said uprights comprise, for each upright, a sleeve (106) sliding on a respective upright, to which a said upper crosspiece is constrained, there being provided a system (107) for the reversible blocking of the position of the sleeve along the upright..

11. Device according to one or more of the preceding claims, comprising coupling brackets (30) for accessories, among which one or more flashes (31) and an umbrella (32).

12. Device according to one or more of the preceding claims, comprising at least one device (33) for activating the zoom of a camera; preferably said zoom activation device comprises a ring that can be fixed to the zoom ferrule of the camera and an activating lever fixed to said ring.

13. Device according to one or more of the preceding claims, comprising a synchronized shooting apparatus (32) for said cameras, comprising at least two jacks (36) for connection to respective sockets integrated in the respective cameras, for remote shooting, there being respective cables (35A, 35B) extending from said jacks, electrically connected to at least one common remote shooting button (33) so that by pressing said button, the cameras connected via said cables shoot a photograph; preferably with a slight pressure of said button activating the autofocus for each camera; preferably said button being provided on said frame.

14. Device according to claim 13, comprising at least two remote shooting buttons (133), each associated with operating a respective camera, and a selector button; if this selector button is in a first position, said two buttons are independent from one another, so that pressing them activates the respective camera; when the selector button is in a second position, the two buttons are connected to one another, so that indifferently pressing one button or the other causes the simultaneous activation of both cameras.

15. Device according to claim 13, wherein there are provided at least three remote shooting buttons, a first said button, connected in parallel to said cables directed toward said remote shooting jacks of the cameras, and second buttons, one per camera, connected directly with respective said remote shooting jacks of the respective cameras, so as to be able to shoot only with the camera desired.

## Patentansprüche

1. Vorrichtung (10) zur Verwendung und zur gleichzeitigen Halterung einer oder mehrerer Kameras (F1, F2) mit einem Rahmen (11) mit mindestens zwei Befestigungsteilen für die jeweiligen Kameras, jeweils einem unteren Teil (14) und einem oberen Teil (13), der im Wesentlichen darüber angeordnet ist, wobei auf den Teilen jeweilige Vorrichtungen (20) zum lösbaren Befestigen der Kameras auf denselben Teilen vorgesehen sind, wobei die Vorrichtung mindestens eine Vorrichtung (27) zur Einstellung der Vertikalneigungs-Ausrichtung um mindestens eine Achse (X) für mindestens eine Kamera aufweist, um zu ermöglichen, dass die Kameras ihre optischen Achsen (K) im Wesentlichen auf denselben Bereich konvergierend haben.

2. Vorrichtung nach Anspruch 1, wobei die Ausrichtungs-Einstellvorrichtung auf einen der Befestigungsteile der Kamera angewendet wird, sodass durch Ausrichtung des Befestigungsteils die daran befestigte Kamera ebenfalls ausgerichtet wird, wobei die Ausrichtungs-Einstellvorrichtung angewendet wird auf
nur den oberen Teil oder
nur den unteren Teil oder
sowohl auf den oberen als auch auf den unteren Teil.

3. Vorrichtung nach Anspruch 1 oder 2, wobei der Rahmen zwei seitliche Ständer (12) und mindestens zwei Querstücke (13, 14) aufweist, auf denen jeweils die Befestigungsteile der Kameras vorgesehen sind.

4. Vorrichtung nach Anspruch 2, wobei die Ausrichtungs-Einstellvorrichtung eine Drehbeschränkung um eines der Querstücke für einen jeweiligen Befestigungsteil aufweist.

5. Vorrichtung nach Anspruch 4, wobei die Ausrichtungs-Einstellvorrichtung ein oberes Querstück (13) aufweist, auf dem der Befestigungsteil für die obere Kamera vorgesehen ist, und mindestens ein Scharnier (28), vorzugsweise zwei, die die Drehbeschränkung bilden, die drehbar mit einem jeweiligen Ständer verbunden sind, wobei ein System (29) zur Blockierung der Drehung des oberen Querstücks an den Scharnieren vorgesehen ist, wobei vorzugsweise das Drehungs-Blockiersystem ein System vom Reibungstyp ist.

6. Vorrichtung nach einem der Ansprüche 2 bis 5, wobei das Querstück ein Stab ist, der an den Enden durch zwei Scharniere (28) gehalten ist, die auf den Ständern vorgesehen sind, wobei vorzugsweise ein System vom Reibungs- oder Drucktyp zur Blockierung des Querstücks in mindestens einem der Scharniere vorgesehen ist.

7. Vorrichtung nach einem oder mehreren der vorstehenden Ansprüche, wobei mindestens einer der Teile eine Einrichtung (20) zur Einstellung der Axialposition der zugeordneten Kamera entlang einer Achse orthogonal zu der ersten Achse aufweist, wobei vorzugsweise beide der Teile die Einrichtung zur Einstellung der Axialposition aufweisen.

8. Vorrichtung nach Anspruch 7, wobei die Einstelleinrichtung einen Schieber (21) zur Befestigung der Kamera aufweist, der mit einem Schieber (21, 22) versehen ist, der ausgebildet ist, um während der Einstellung innerhalb einer Spur (23A, 23B) zu gleiten, die sich entlang der Richtung der Einstellung erstreckt, wobei eine Einrichtung zur Festlegung des Schiebers auf der Spur vorgesehen ist.

9. Vorrichtung nach einem oder mehreren der vorstehenden Ansprüche mit einem unteren Befestigungsteil (15) zur Befestigung an einer Haltestruktur, wobei vorzugsweise der untere Befestigungsteil ein System zur Befestigung eines Dreibeins oder eines Stativs (16) aufweist.

10. Vorrichtung nach einem oder mehreren der Ansprüche 3 bis 5, wobei eine Einrichtung (105) zur Einstellung der Länge der Ständer vorgesehen ist, wobei vorzugsweise die Einrichtung zur Einstellung der Länge der Ständer für jeden Ständer eine Hülse (106) aufweist, die auf einem jeweiligen Ständer verschoben wird, an der das obere Querstück gehalten ist, wobei ein System (107) zur reversiblen Sperrung der Position der Hülse entlang des Ständers vorgesehen ist.

11. Vorrichtung nach einem oder mehreren der vorstehenden Ansprüche mit Verbindungshalterungen (30) für Zubehörteile, unter anderem Blitzlichter (31) und einen Schirm (32).

12. Vorrichtung nach einem oder mehreren der vorstehenden Ansprüche mit mindestens einer Vorrichtung (33) zur Aktivierung des Zooms einer Kamera, wobei vorzugsweise die Zoom-Aktivierungsvorrichtung einen Ring aufweist, der an dem Zoom-Klemmring der Kamera fixiert ist, und einen Aktivierungshebel, der an dem Ring befestigt ist.

13. Vorrichtung nach einem oder mehreren der vorstehenden Ansprüche mit einer synchronisierten Auslösevorrichtung (32) für die Kameras mit mindestens zwei Buchsen (36) zur Verbindung mit jeweiligen Sockeln, die in den jeweiligen Kameras integriert sind, für eine Fernauslösung, wobei jeweilige Kabel (35 A, 35 B) vorgesehen sind, die sich von den Buchsen erstrecken, die elektrisch mit einem gemeinsamen Fernauslöser-Knopf (33) verbunden sind, sodass durch Drücken des Knopfes die über die Kabel verbundenen Kameras eine Fotografie aufnehmen, wobei vorzugsweise mit einem geringen Druck auf den Knopf der Autofokus für jede Kamera aktiviert wird, wobei vorzugsweise der Knopf auf dem Rahmen vorgesehen ist.

14. Vorrichtung nach Anspruch 13 mit mindestens zwei Fernauslöser-Knöpfen (133), von denen jeder der Bedienung einer jeweiligen Kamera zugeordnet ist, und einem Auswahlknopf, wobei, wenn dieser Auswahlknopf in einer ersten Position ist, die beiden Knöpfe unabhängig voneinander sind, sodass durch ihr Drücken die jeweilige Kamera aktiviert, wobei, wenn der Auswahlknopf in einer zweiten Position ist, die beiden Knöpfe miteinander verbunden sind, sodass unabhängig von dem Drücken des einen Kopfes oder des anderen eine gleichzeitige Aktivierung beide Kameras auslöst.

15. Vorrichtung nach Anspruch 13, wobei mindestens drei Fernauslöser-Knöpfe vorgesehen sind, einen ersten Knopf, der parallel zu den Kabeln verbunden ist, die zu den Fernauslöser-Buchsen der Kameras führen, und zweiten Knöpfen, einer pro Kamera, die direkt mit den jeweiligen Fernauslöser-Buchsen der jeweiligen Kameras verbunden sind, um, falls gewünscht, nur eine Kamera auszulösen.

## Revendications

1. Dispositif (10) pour l'utilisation et le support simultané de plus d'un appareil photographique (F1, F2), comprenant un cadre (11) pourvu d'au moins deux pièces de fixation pour des appareils photographiques respectifs, respectivement une pièce inférieure (14) et une pièce supérieure (13) placée sensiblement au-dessus d'elle ; sur lesdites pièces est prévu un appareil respectif (20) pour une fixation amovible des appareils photographiques sur ces pièces ; ledit dispositif comprenant au moins un dispositif (27) pour régler l'orientation, l'inclinaison verticale, au moins autour d'un premier axe (X), pour au moins un appareil photographique, de façon à permettre aux appareils photographiques d'avoir leurs axes optiques (K) sensiblement convergeant vers la même zone.

2. Dispositif selon la revendication 1, dans lequel ledit dispositif de réglage d'orientation est appliqué à l'une desdits pièces de fixation de l'appareil photographique, de sorte qu'en orientant ladite pièce de fixation, l'appareil photographique fixé à elle est également orienté ; ledit dispositif de réglage d'orientation est appliqué
- seulement à ladite pièce supérieure, ou
- seulement à ladite pièce inférieure ou
- à la fois auxdites pièces supérieure et inférieure.

3. Dispositif selon la revendication 1 ou 2, dans lequel ledit cadre comprend deux montants latéraux (12) et au moins deux pièces transversales (13, 14) sur lesquelles sont prévues respectivement lesdites pièces de fixation des appareils photographiques.

4. Dispositif selon la revendication 2, dans lequel ledit dispositif de réglage d'orientation comprend une contrainte de rotation autour de l'une desdites pièces transversales pour une pièce de fixation respective.

5. Dispositif selon la revendication 4, dans lequel ledit dispositif de réglage d'orientation comprend la pièce transversale supérieure (13) parmi desdites pièces transversales, sur laquelle est prévue la pièce de fixation pour l'appareil photographique supérieur, et au moins une articulation (28), de préférence deux, formant ladite contrainte de rotation, reliée en rotation à un montant respectif, un système (29) étant prévu pour bloquer la rotation de ladite pièce transversale supérieure sur lesdites articulations ; de préférence ledit système de blocage de rotation est un système de type friction.

6. Dispositif selon l'une ou plusieurs des revendications 2 à 5, dans lequel ladite pièce transversale est une barre contrainte aux extrémités par deux articulations (28) prévues sur lesdits montants ; de préférence, une friction ou un système de type pression est prévu pour bloquer ladite pièce transversale dans au moins l'une desdites articulations.

7. Dispositif selon l'une ou plusieurs des revendications précédentes, dans lequel au moins l'une desdites pièces comprend des moyens (20) pour régler la position axiale de l'appareil photographique associé le long d'un axe orthogonal audit premier axe ; de préférence lesdites deux pièces comprennent des moyens pour régler la position axiale.

8. Dispositif selon la revendication 7, dans lequel lesdits moyens d'ajustement comprennent une glissière (21) pour fixer l'appareil photographique, prévue avec un coulisseau (21, 22) apte à glisser durant le réglage, à l'intérieur d'une piste (23A, 23B) qui s'étend dans la direction du réglage, des moyens étant prévus pour verrouiller ladite glissière sur ladite piste.

9. Dispositif selon l'une ou plusieurs des revendications précédentes, comprenant une pièce de fixation inférieure (15) pour une fixation à une structure de support ; de préférence avec ladite pièce de fixation inférieure comprenant un système pour un couplage à un trépied ou à un socle (16).

10. Dispositif selon l'une ou plusieurs des revendications 3 à 5, dans lequel des moyens (105) sont prévus pour le réglage de la longueur desdits montants ; de préférence lesdits moyens pour le réglage de la longueur desdits montants comprennent, pour chaque montant, un manchon (106) coulissant sur un montant respectif, auquel ladite pièce transversale supérieure est contrainte, un système (107) étant prévu pour le blocage réversible de la position du manchon le long du montant.

11. Dispositif selon l'une ou plusieurs des revendications précédentes, comprenant des pattes de couplage (30) pour des accessoires, parmi lesquels un ou plusieurs flashes (31) et un parapluie (32).

12. Dispositif selon l'une ou plusieurs des revendications précédentes, comprenant au moins un dispositif (33) pour activer le zoom d'un appareil photographique ; de préférence ledit dispositif d'activation de zoom comprend un anneau qui peut être fixé à la ferrule du zoom de l'appareil photographique et un levier d'activation fixé audit anneau.

13. Dispositif selon l'une ou plusieurs des revendications précédentes, comprenant un appareil de prise de vue synchronisée (32) pour lesdits appareils photographiques, comprenant au moins deux fiches mâles (36) pour une connexion à des fiches femelles respectives intégrées dans l'appareil photographique respectif, pour une prise de vue éloignée, des câbles respectifs (35A, 35B) s'étendant depuis lesdites fiches mâles et étant connectés électriquement à au moins un bouton de prise de vue éloigné commun (33), de sorte qu'en appuyant sur ledit bouton, les appareils photographiques connectés via lesdits câbles prennent une photographie; de préférence avec une légère pression sur ledit bouton activant la mise au point automatique pour chaque appareil photographique ; de préférence ledit bouton étant prévu sur ledit cadre.

14. Dispositif selon la revendication 13, comprenant au moins deux boutons de prise de vue éloignée (133), chacun étant associé avec l'actionnement d'un appareil photographique respectif, et un bouton de sélection ; si ce bouton de sélection est dans une première position, lesdits deux boutons sont indépendants l'un de l'autre, de sorte que le fait d'appuyer sur eux active l'appareil photographique correspondant ; lorsque le bouton de sélection est dans une seconde position, les deux boutons sont connectés l'un à l'autre, de sorte que le fait de presser indifféremment sur un bouton ou sur l'autre provoque l'activation simultanée des deux appareils photographiques.

15. Dispositif selon la revendication 13, dans lequel il est prévu au moins trois boutons de prise de vue éloignée, un premier desdits boutons, connecté en parallèle auxdits câbles dirigés vers lesdites fiches mâles de prise de vue éloignée des appareils photographiques, et des deuxièmes boutons, un par appareil photographique, connectés directement avec lesdites fiches mâles de prise de vue éloignée respectives des appareils photographiques respectifs, de façon à être capables de prendre des photographies seulement avec l'appareil photographique désiré.
